# EUROPÄISCHE PATENTSCHRIFT

(11) **EP 1 870 263 B1**
(45) Veröffentlichungstag und Bekanntmachung des Hinweises auf die Patenterteilung: **03.03.2010**
(21) Anmeldenummer: 07005996.9
(22) Anmeldetag: 23.03.2007
(51) Int. Cl.: B60G 3/20, B60G 7/00

(54) **Radaufhängung für insbesondere ein ungelenktes Hinterrad eines Kraftfahrzeugs**
Wheel suspension in particular for the non-articulated rear wheel of a motor vehicle
Suspension de roue de véhicule pour une roue arrière fixe d'un véhicule automobile en particulier

(30) Priorität: 22.06.2006 DE 102006029136
(43) Veröffentlichungstag der Anmeldung: 26.12.2007
(73) Patentinhaber: AUDI AG, 85045 Ingolstadt (DE)
(72) Erfinder: Feigl, Markus, 80935 München (DE)
(74) Vertreter: Asch, Konrad

(56) Entgegenhaltungen:
- EP-A- 0 323 815
- EP-A- 0 340 823
- EP-A- 1 110 846
- DE-A1- 3 704 323
- DE-A1- 4 224 484
- DE-A1- 19 857 394
- JP-A- 6 064 427
- JP-A- 60 092 977
- US-A- 4 835 714
- US-A1- 2005 051 988

## Beschreibung

Die Erfindung betrifft eine Radaufhängung für insbesondere ein ungelenktes Hinterrad eines Kraftfahrzeugs nach dem Oberbegriff des Patentanspruchs 1.

Hinterradaufhängungen eines Kraftfahrzeugs können mit ihren elastokinematischen Eigenschaften so ausgelegt werden, dass sich deren Eigenlenkverhalten bei einem Längs- und/oder Seitenkrafteinfluss der jeweiligen Fahrsituation anpasst.

Eine solche Radaufhängung für ein ungelenktes Hinterrad eines Kraftfahrzeugs weist bekanntermaßen einen Radträger auf, der über einen Mehrlenkerverband am Fahrzeugaufbau angelenkt ist. Dem Mehrlenkerverband kann ein Spurlenker zur Spurstabilisierung zugeordnet sein.

Die durch die Abstützung der Lenker gegenüber dem Aufbau und/oder dem Radträger vorgegebenen Lagerelastizitäten bzw. die Kinematik der Radaufhängung kann so ausgelegt sein, dass sich der Radträger mit dem daran befestigten Rad unter Seiten- und/oder Längskrafteinfluss gezielt verstellt. Dadurch kann das Sturzwinkel- und/oder Spurwinkelverhalten des Fahrzeugs beim Bremsen oder Durchfahren einer Kurve angepasst werden. Die Anpassung des Fahrverhaltens erfolgt mit einer gewissen Verzögerung. Eine optimale Anpassung des Spur- oder Sturzverhaltens an alle Fahrzeugsituationen ist jedoch mit einer reinen elastokinematischen Auslegung nicht möglich.

Aus der DE 37 04 323 A1 ist eine gattungsgemäße Radaufhängung für ein ungelenktes Hinterrad eines Kraftfahrzeuges bekannt. Darin ist ein Radträger über einen Mehrlenkerverband am Fahrzeugaufbau angelenkt. Im Mehrlenkerverband ist ein Spurlenker zur Spurstabilisierung angeordnet, der längenverstellbar ist, um das elastokinematische Verhalten der Radaufhängung einzustellen.

Aus der DE 42 24 484 A1 ist eine Radaufhängung für ein ungelenktes Hinterrad eines Kraftfahrzeuges bekannt, bei dem der Radträger über einen unteren Trapezlenker und einen oberen Querlenker mit dem Fahrzeugaufbau verbunden ist. Ein Spurlenker ist dem unteren Trapezlenker sowie dem oberen Querlenker in der Fahrtrichtung nachgelagert. Der Radträger weist außerdem einen sich in gegen der Fahrtrichtung schräg nach unten erstreckenden Lenkarm auf, der an seinem Ende einen Lagerbolzen trägt. Am Lagerbolzen ist der Spurlenker angelenkt. Dieser ist in etwa L-förmig mit einer starr nach unten abragenden Koppel ausgebildet, die sich am untern Trapezlenker abstützt.

Aus der DE 600 09 244 T2 ist ein Kraftfahrzeuglenksystem bekannt, das Stellantriebe zum Verschwenken der gelenkten Räder des Kraftfahrzeugs aufweist. Jeder Stellantrieb weist ein Gehäuse mit einer darin verstellbar geführten Welle auf, die mit dem Radträger des jeweiligen gelenkten Rads gekoppelt ist.

Die Aufgabe der Erfindung besteht darin, eine Radaufhängung für insbesondere ein ungelenktes Hinterrad eines Kraftfahrzeugs bereitzustellen, deren elastokinematisches Verhalten in einfacher Weise einstellbar bzw. veränderbar ist.

Die Aufgabe der Erfindung ist durch die Merkmale des Patentanspruchs 1 gelöst. Vorteilhafte Weiterbildungen der Erfindung sind in den Unteransprüchen offenbart.

Gemäß dem kennzeichnenden Teil des Patentanspruches 1 ist ein Spurlenker aus dem Mehrlenkerverband ein längenverstellbares Stellelement, mit dem das elastokinematische Verhalten der Radaufhängung einstellbar ist. Bei Betätigung kann das Stellelement aktiv gegen die Elastizitäten und die Kinematik der Radaufhängung arbeiten, so dass der elastokinematische Bewegungsbereich der Radaufhängung vollständig ausgeschöpft werden kann. Die Radaufhängung ist daher aktiv und nahezu verzögerungsfrei der jeweiligen Fahrsituation anpassbar. So kann etwa das Spurwinkel- bzw. das Sturzwinkelverhalten der ungelenkten Hinterräder aktiv der jeweiligen Fahrsituation angepasst werden, wogegen die gelenkten Vorderräder mit dem Fahrzeuglenksystem in Verbindung sind. Mit dem erfindungsgemäßen Stellelement steht somit bei der Auslegung der Radaufhängung ein zusätzlicher Freiheitsgrad zur Verfügung.

Der Spurlenker des Mehrlenkerverbands unterstützt eine spurstabile Radführung. Aufgrund der Ausbildung des Spurlenkers als längenverstellbares Element kann schon bei geringen Stellbewegungen des Spurlenkers eine nennenswerte Winkeländerung des Radträgers erzielt werden.

Die sich bei einem Längs- und/oder Seitenkrafteinfluss oder bei einer Fahrzeugbeladung ergebende Änderung der Winkellage der Radaufhängung ist durch die Kinematik der Radaufhängung und die Elastizitäten der verwendeten Lager begrenzt. Um diesen Bewegungsbereich der Radaufhängung vollständig auszuschöpfen, kann abhängig von der Geometrie der Radaufhängung bereits ein Stellhub des Stellelements in einer Größenordnung von bis zu 20mm als Obergrenze ausreichen. Mit dem erfindungsgemäßen Stellelement kann daher ein in einem weiten Bereich auslegbares Eigenlenkverhalten insbesondere beim Durchfahren von Kurven und bei Bremsvorgängen bereitgestellt werden. So kann mittels eines längenverstellbaren Spurlenkers bereits bei geringfügiger Längenverstellung von wenigen Millimetern der Spurwinkel und/oder der Sturzwinkel des an der Radaufhängung befestigten Hinterrads nahezu verzögerungsfrei und optimal angepasst eingestellt werden.

Um eine betriebssichere Längenverstellung des Spurlenkers sowie eine einfache Ansteuerung des Spurlenkers zu erreichen, kann dieser als ein hydraulisch betätigbares Stellglied ausgebildet sein, das in einem Hydraulikschaltkreis eingebunden und mittels einer elektronischen Regeleinrichtung ansteuerbar ist. Alternativ kann das Stellelement auch elektromechanisch betätigbar sein.

Erfindungsgemäß ist das längenverstellbare Stellelement in einer Radaufhängung eingesetzt, deren Lenkerverband einen unteren Trapezlenker sowie einen oberen Querlenker aufweist. Aus Gründen der Fahrstabilität kann dabei ein Spurlenker den Lenkern des Lenkerverbands in der Fahrtrichtung nachgelagert und zugleich als das längenverstellbare Stellelement ausgebildet sein.

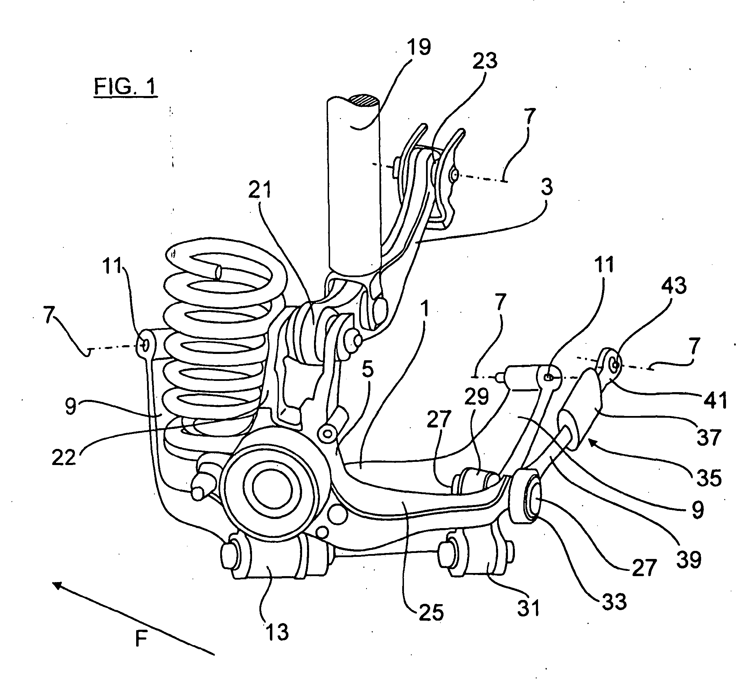

Ein Ausführungsbeispiel der Erfindung ist nachfolgend anhand der Figur beschrieben, die eine unabhängige Radaufhängung eines Kraftfahrzeugs in einer perspektivischen Ansicht zeigt.

Die in der Figur gezeigte unabhängige Radaufhängung für ein ungelenktes Hinterrad eines Kraftfahrzeugs weist einen unteren verwindungssteifen Trapezlenker 1 sowie einen oberen, quer zur Fahrtrichtung F verlaufenden Querlenker 3 auf. Die beiden Lenker 1 und 3 verbinden einen Radträger 5 mit einem nur strichpunktiert angedeuteten Fahrzeugaufbau 7. Hierzu ist der untere Trapezlenker 1 mit seinen zwei seitlichen Auslegern 9 über nur angedeutete Elastomerlager 11 mit dem Fahrzeugaufbau 7 gelenkig verbunden, sowie an seinem Mittelabschnitt über ein Elastomerlager 13 unterseitig am Radträger 5 angelenkt. Auf dem in der Fahrtrichtung F vorderen Ausleger 9 des Trapezlenkers 1 ist in bekannter Weise eine Tragfeder 15 abgestützt. Die Tragfeder 15 trägt zusammen mit dem in der Figur lediglich angedeuteten Stoßdämpfer 19, der sich auf dem oberen Querlenker 3 abstützt, den Fahrzeugaufbau 7.

Der obere Querlenker 3 ist über ein Elastomerlager 21 mit einem nach oben geführten gegabelten Arm 22 in Verbindung, der den Querlenker 3 umgreift, und über das Elastomerlager 23 mit dem Fahrzeugaufbau 7 schwenkbar in Verbindung.

Anstelle der in der Figur gezeigten Elastomerlager können in Abhängigkeit von der Lenkergeometrie oder dem gewünschten Eigenlenkverhalten auch Kugelgelenke eingesetzt werden.

Wie aus der Figur hervorgeht, weist der Radträger 5 einen sich entgegen der Fahrtrichtung F schräg nach unten erstreckenden Lenkarm 25 auf, der an seinem Ende einen Lagerbolzen 27 trägt. Der Lagerbolzen 27 ist über ein erstes Elastomerlager 29 mit einer Koppel 31 und über ein zweites Elastomerlager 33 mit einem Spurlenker 35 gelenkig verbunden. Die Koppel 31 ist an ihrem unteren Ende am unteren Trapezlenker 1 angelenkt, so dass sich der Radträger 5 über den Lenkarm 25 und die Koppel 31 am unteren Trapezlenker 1 abstützt.

Der Spurlenker 35 ist gemäß der Figur ein längenverstellbares Stellelement, das hier beispielhaft eine teleskopartig verschiebbar in einem Hydraulikzylinder 37 gelagerte Stellstange 39 aufweist. Die Stellstange 39 ist mittels eines nicht gezeigten Arbeitskolbens verschiebbar in dem Hydraulikzylinder 37 geführt, der zusammen mit dem Arbeitskolben eine volumenveränderliche Hydraulikkammer begrenzt. Diese ist über nicht dargestellte Hydraulikleitungen mit einer Steuereinrichtung verbunden, die Hydraulikkammer entsprechend mit Druck beaufschlagen kann. Der Hydraulikzylinder 37 ist fahrzeugaufbauseitig mit einem Lageransatz 41 ausgebildet, der über ein angedeutetes Elastomerlager 43 mit dem Fahrzeugaufbau 7 in Verbindung ist. Die Stellstange 39 ist radträgerseitig über das Elastomerlager 33 mit dem Lenkarm 25 und der Koppel 31 gelenkig in Verbindung.

Im Fahrbetrieb ist die gezeigte Radaufhängung bei angreifenden Seiten- oder Längskräften oder bei einer Fahrzeugbeladung in seiner Spur- oder Sturzwinkellage über ein gewisses Bewegungsspiel veränderbar.

Um dabei für die jeweilige Fahrsituation möglichst verzögerungsfrei das angestrebte Fahrverhalten zu erreichen, erfasst die Regeleinrichtung des Spurlenkers 35 mittels Sensoren fahrspezifische Parameter, etwa die Fahrzeuggeschwindigkeit, Lenkwinkel, Giergeschwindigkeit, Höhenstand, etc. Anhand dieser Parameter ermittelt die Regeleinrichtung die optimale Winkellage des Radträgers 5. Entsprechend steuert die Regeleinrichtung den hydraulisch betätigbaren Spurlenker 35 an.

Beispielhaft kann mittels der Regeleinrichtung das Sturzverhalten nach einer Fahrzeugbeladung angepasst werden. In diesem Fall erfasst die Regeleinrichtung den sich bei der Fahrzeugbeladung ändernden Höhenstand des Fahrzeugs, woraus die Regeleinrichtung einen entsprechenden Stellhub des Spurlenkers 35 ermittelt. Auf diese Weise kann der Spurlenker 35 die Radaufhängung derart verstellen, dass sich trotz der Fahrzeugbeladung bei der Geradeausfahrt kein Sturzwinkel ergibt.

## Patentansprüche

1. Radaufhängung für ein ungelenktes Hinterrad eines Kraftfahrzeugs, mit einem Radträger (5), der über einen Mehrlenkerverband (1, 3, 35) am Fahrzeugaufbau (7) angelenkt ist, welchem Mehrlenkerverband (1, 3, 35) ein Spurlenker (35) zur Spurstabilisierung zugeordnet ist, wobei der Spurlenker (35) ein längenverstellbares Stellelement ist, mit dem das elastokinematische Verhalten der Radaufhängung einstellbar ist, **dadurch gekennzeichnet, dass** der Lenkerverband einen unteren Trapezlenker (1) sowie einen oberen Querlenker (3) aufweist, und der Spurlenker (35) sowohl dem unteren Trapezlenker (1) als auch dem oberen Querlenker (3) des Lenkerverbands in der Fahrtrichtung (F) nachgelagert ist, wobei der Radträger (5) einen sich entgegen der Fahrtrichtung (F) schräg nach unten erstreckenden Lenkarm (25) aufweist, der an seinem Ende einen Lagerbolzen (27) trägt, wobei der Lagerbolzen (27) über ein erstes Elastomerlager (29) mit einer am unteren Trapezlenker (1) angelenkten Koppel (31) und über ein zweites Elastomerlager (33) mit dem Stellelement (35) gelenkig verbunden ist.

2. Radaufhängung nach Anspruch 1, **dadurch gekennzeichnet, dass** ein Stellhub des längenverstellbaren Stellelements (35) durch den sich aufgrund der Kinematik der Radaufhängung bzw. der Elastizitäten der verwendeten Lager (11, 13, 21, 23, 29, 33, 43) ergebenden Bewegungsbereich begrenzt ist.

3. Radaufhängung nach Anspruch 1 oder 2, **dadurch gekennzeichnet, dass** der Stellhub des längenverstellbaren Stellelements (35) in einer Größenordnung von bis zu 20mm liegt.

4. Radaufhängung nach einem der vorhergehenden Ansprüche, **dadurch gekennzeichnet, dass** das längenverstellbare Stellelement (35) jeweils über Elastomerlager (33, 43) am Aufbau (7) und am Radträger (5) angelenkt ist.

5. Radaufhängung nach einem der vorhergehenden Ansprüche, **dadurch gekennzeichnet, dass** mittels des Stellelements (35) der Spurwinkel und/oder der Sturzwinkel des an der Radaufhängung befestigten Hinterrads einstellbar ist.

6. Radaufhängung nach einem der vorhergehenden Ansprüche, **dadurch gekennzeichnet, dass** das Stellelement (35) ein hydraulisch betätigbares Stellglied ist.

7. Radaufhängung nach einem der Ansprüche 1 bis 5, **dadurch gekennzeichnet, dass** das Stellelement (35) elektromechanisch betätigbar ist.

## Claims

1. Wheel suspension for a non-steered rear wheel of a motor vehicle, having a wheel carrier (5) which is articulatedly connected to the vehicle body (7) by means of a multi-link assembly (1, 3, 35), which multi-link assembly (1, 3, 35) is assigned a toe link (35) for toe stabilization, with the toe link (35) being a length-adjustable actuating element by means of which the elastokinematic behaviour of the wheel suspension can be adjusted, **characterized in that** the link assembly has a lower trapeziform link (1) and an upper transverse link (3), and the toe link (35) is positioned behind both the lower trapeziform link (1) and the upper transverse link (3) of the link assembly in the direction of travel (F), with the wheel carrier (5) having a link arm (25) extending obliquely downward counter to the direction of travel (F), which link arm (25) supports, at its end, a bearing journal (27), with the bearing journal (27) being articulatedly connected by means of a first elastomer bearing (29) to a coupler (31) which is articulatedly connected to the lower trapeziform link (1) and being articulatedly connected by means of a second elastomer bearing (33) to the actuating element (35).

2. Wheel suspension according to Claim 1, **characterized in that** an actuating stroke of the length-adjustable actuating element (35) is limited by the movement range resulting from the kinematics of the wheel suspension and the elasticities of the bearing (11, 13, 21, 23, 29, 33, 43) which is used.

3. Wheel suspension according to Claim 1 or 2, **characterized in that** the actuating stroke of the length-adjustable actuating element (35) is of the order of magnitude of up to 20 mm.

4. Wheel suspension according to one of the preceding claims, **characterized in that** the length-adjustable actuating element (35) is articulatedly connected in each case by means of elastomer bearings (33, 43) to the body (7) and to the wheel carrier (5).

5. Wheel suspension according to one of the preceding claims, **characterized in that** the toe angle and/or the camber angle of the rear wheel which is fastened to the wheel suspension can be adjusted by means of the actuating element (35).

6. Wheel suspension according to one of the preceding claims, **characterized in that** the actuating element (35) is a hydraulically operable actuator.

7. Wheel suspension according to one of Claims 1 to 5, **characterized in that** the actuating element (35) can be operated electromechanically.

## Revendications

1. Suspension de roue pour une roue arrière fixe d'un véhicule automobile, comprenant un support de roue (5) qui est articulé par le biais d'un assemblage à plusieurs bras oscillants (1, 3, 35) à la carrosserie du véhicule (7), un bras oscillant de chaussée (35) pour la stabilisation par rapport à la chaussée étant associé audit assemblage à plusieurs bras oscillants (1, 3, 35) , le bras oscillant de chaussée (35) étant un élément de réglage réglable en longueur avec lequel le comportement élasto-cinématique de la suspension de roue peut être ajusté, **caractérisée en ce que** l'assemblage de bras oscillants présente un bras oscillant trapézoïdal inférieur (1), ainsi qu'un bras oscillant transversal supérieur (3), et le bras oscillant de chaussée (35) étant monté après le bras oscillant trapézoïdal inférieur (1) et après le bras oscillant transversal supérieur (3) de l'assemblage de bras oscillants dans la direction de conduite (F), le support de roue (5) présentant un bras de direction (25) s'étendant obliquement vers le bas dans le sens opposé à la direction de conduite (F), lequel porte à son extrémité un boulon de palier (27), le boulon de palier (27) étant connecté de manière articulée par le biais d'un premier palier élastomère (29) à une bielle (31) articulée au bras oscillant trapézoïdal inférieur (1) et par le biais d'un deuxième palier élastomère (33) à l'élément de réglage (35).

2. Suspension de roue selon la revendication 1, **caractérisée en ce qu'**une course de réglage de l'élément de réglage réglable en longueur (35) est limitée par la plage de déplacement résultant de la cinématique de la suspension de roue ou des élasticités des paliers utilisés (11, 13, 21, 23, 29, 33, 43).

3. Suspension de roue selon la revendication 1 ou 2, **caractérisée en ce que** la course de réglage de l'élément de réglage réglable en longueur (35) se situe dans un ordre de grandeur allant jusqu'à 20 mm.

4. Suspension de roue selon l'une quelconque des revendications précédentes, **caractérisée en ce que** l'élément de réglage réglable en longueur (35) est articulé à chaque fois par le biais de paliers élastomères (33, 43) à la carrosserie (7) et au support de roue (5).

5. Suspension de roue selon l'une quelconque des revendications précédentes, **caractérisée en ce que** l'angle de pincement et/ou l'angle de piqué de la roue arrière fixée à la suspension de roue peut être ajusté au moyen de l'élément de réglage (35).

6. Suspension de roue selon l'une quelconque des revendications précédentes, **caractérisée en ce que** l'élément de réglage (35) est un actionneur à commande hydraulique.

7. Suspension de roue selon l'une quelconque des revendications 1 à 5, **caractérisée en ce que** l'élément de réglage (35) peut être commandé de manière électromécanique.
